# FASCICULE DE BREVET EUROPEEN

(11) **EP 2 582 979 B1**
(45) Date de publication et mention de la délivrance du brevet: **16.09.2015**
(21) Numéro de dépôt: 11741093.6
(22) Date de dépôt: 15.06.2011
(51) Int. Cl.: F04B 35/04, F04B 39/06, F04B 39/12, F04C 23/00, F04C 29/00, F04B 27/08, H02K 51/00, B60K 6/26, H02K 5/16, B60H 1/32, H02K 7/14

(54) **COMPRESSEUR ELECTRIQUE A ARBRE COURT**
ELECTRIC COMPRESSOR WITH SHORT SHAFT
ELEKTRISCH ANGETRIEBENER VERDICHTER MIT KURZER WELLE

(30) Priorité: 15.06.2010 FR 1002529
(43) Date de publication de la demande: 24.04.2013
(73) Titulaire: Valeo Japan Co., Ltd., Saitama 360-0193 (JP)
(72) Inventeur: BELLET, Augustin, F-91410 Dourdan (FR); GUITARI, Imed, F-78990 Elancourt (FR); BACHET, Isabelle, F-91120 Palaiseau (FR)
(74) Mandataire: Delplanque, Arnaud
(86) Numéro de dépôt international: PCT/EP2011/002943
(87) Numéro de publication internationale: WO 2011/157411

(56) Documents cités:
- EP-A1- 1 550 808
- DE-A1-102008 000 124
- JP-A- 2009 287 492
- US-A- 5 675 203
- US-A1- 2002 110 461

## Description

Le secteur technique de la présente invention est celui des compresseurs constitutifs d'un circuit de fluide réfrigérant équipant un véhicule automobile.

Le fluide réfrigérant est classiquement mis en circulation à l'intérieur d'un circuit de climatisation par l'intermédiaire d'un compresseur. Dans les véhicules équipés d'un moteur à combustion interne, ce compresseur est de type mécanique car sa rotation est entraînée au moyen d'une poulie reliée au moteur à combustion interne par une courroie.

Le nombre de véhicules hybrides, c'est-à-dire à moteur à combustion interne couplé à un moteur électrique, ou tout électrique, c'est-à-dire exclusivement propulsé par un moteur électrique, est en constante augmentation du fait de la raréfaction des énergies fossiles qui alimentent les véhicules équipés de moteur à combustion interne.

L'énergie mécanique fournie habituellement par le moteur à combustion interne est donc moins disponible ou complètement indisponible pour le cas des véhicules tout électrique.

Des compresseurs entrainés par un moteur électrique dédié existent dans la littérature. Ce moteur électrique est constitué d'un stator périphérique à l'intérieur duquel est installé un rotor. Autrement dit, le rotor est placé à l'intérieur et au centre du stator.

Ce type de moteur électrique a été remplacé par un moteur électrique à rotor externe, où le rotor tourne périphériquement autour d'un stator installé fixement au centre du rotor. Le document JP2009-287492 divulgue un tel compresseur utilisant un moteur électrique dans lequel le rotor est installé à l'extérieur et périphériquement au stator. Le document US2002/0110461 divulgue également un compresseur comportant un tel moteur électrique.

Cependant, les dimensions des compresseurs de l'art antérieur ne sont pas optimisées, en particulier en ce qui concerne le positionnement de l'arbre relié au rotor.

Par ailleurs, la circulation de fluide réfrigérant à l'intérieur du compresseur est inadaptée au cas où l'entrée et la sortie de fluide réfrigérant sont aux extrémités du compresseur. Dans un tel cas, le fluide réfrigérant doit contourner le moteur électrique. Cette circulation particulière de fluide réfrigérant au travers du compresseur n'a pas été prise en compte dans les documents JP2009-287492 et US2002/0110461 ce qui rend le compresseur montré dans ce document inutilisable dans le cas évoqué plus haut.

Un autre inconvénient de l'état de la technique cité ci-dessus réside dans le fait que le stator n'est pas refroidit car ce dernier n'est pas en contact avec ce fluide réfrigérant en mouvement dans le compresseur.

Le but de la présente invention est donc de résoudre les inconvénients décrits ci-dessus principalement en modifiant la liaison entre l'arbre central et le boîtier, ce qui permet de raccourcir cet arbre et ainsi libérer la partie centrale du compresseur au niveau du stator. Ceci permet de gagner en encombrement externe puisque le stator peut être réduit et occuper l'espace utilisé par l'arbre dans l'art antérieur. Ces espaces libérés peuvent également être utilisés pour la circulation du fluide réfrigérant sans pour autant altérer la perte de charge interne et tout en refroidissant le stator du moteur électrique.

L'invention a donc pour objet un compresseur électrique comprenant un mécanisme de compression entrainé en rotation par un dispositif d'entrainement traversant un boîtier principal qui délimite un volume interne à l'intérieur duquel est installé un moteur électrique, le moteur électrique comprenant un stator et un rotor qui s'étend au moins partiellement à la périphérie externe du stator, ledit dispositif d'entraînement comprenant le rotor solidaire d'un arbre qui passe au travers d'un plateau solidaire du boîtier principal, caractérisé en ce qu'il comprend un premier moyen de rotation entre l'arbre et le plateau et un second moyen de rotation entre le dispositif d'entraînement et le plateau.

On comprend ici que le second moyen de rotation est interposé entre le plateau et l'une quelconque des pièces constitutives du dispositif d'entraînement, par exemple l'arbre mais aussi un support constitutif du rotor.

Les avantages évoqués ci-dessus sont rendus possibles grâce au fait que le mouvement radial de l'arbre du compresseur selon l'invention est maintenu par un premier moyen de rotation alors que le mouvement axial de cet arbre est limité par un second moyen de rotation, ces deux moyens de rotation étant en appui sur le plateau constitutif du boîtier du compresseur.

Selon une première caractéristique de l'invention, le premier moyen de rotation présente un axe de rotation et le deuxième moyen de rotation s'étend dans un plan, ledit plan et ledit axe s'étendant angulairement l'un par rapport à l'autre.

Selon une deuxième caractéristique de l'invention, le plateau comprend une paroi interne tournée vers le moteur et ledit rotor comprend un support sur lequel est solidarisé une multiplicité d'aimants permanents, ledit second moyen de rotation étant interposé entre le support et la paroi.

Selon une variante, le plateau comprend une paroi interne tournée vers le moteur électrique et l'arbre comprend un disque, ledit second moyen de rotation étant interposé entre ledit disque et la paroi. De manière avantageuse, le disque fixé à demeure sur l'arbre, soit en rapportant le disque et en le soudant sur l'arbre, soit en usinant directement le disque directement dans la masse avec l'arbre.

Selon une autre caractéristique de l'invention, le plateau comprend une paroi externe tournée vers le mécanisme de compression, ladite paroi externe délimitant un logement de réception du premier moyen de rotation.

Selon encore une caractéristique de l'invention, le support comprend un fond solidarisé sur l'arbre et qui s'étend radialement par rapport à l'arbre, ledit fond comprenant au moins une ouverture pour la circulation d'un fluide réfrigérant.

Selon encore une autre caractéristique de l'invention, l'arbre comporte une butée circonférentielle contre laquelle le premier moyen de rotation prend appui.

Avantageusement, la multiplicité d'aimants permanents et le stator sont désaxés, ledit stator étant décalé vers le mécanisme de compression.

Le premier moyen de rotation est un roulement à rangée unique de billes ou un roulement à rangée double de billes, ce premier moyen de rotation étant un moyen de rotation axial.

De son côté, le second moyen de rotation est un roulement à rouleaux, ce second moyen de rotation étant un moyen de rotation axial.

Alternativement, le second moyen de rotation est un palier lisse, l'utilisation de ce dernier étant par exemple envisagée en présence du disque solidarisé sur l'arbre.

Avantageusement encore, le moteur électrique sépare le volume interne en délimitant d'un côté une première chambre et de l'autre une deuxième chambre, ladite première chambre étant alimentée en fluide réfrigérant par une entrée pratiquée dans le boîtier principal alors que la deuxième chambre alimente le mécanisme de compression via un passage traversant le plateau.

Un tout premier avantage de l'invention réside dans la possibilité de faire circuler le fluide réfrigérant d'une extrémité à l'autre du compresseur en passant par le centre de ce dernier, ce qui permet de concevoir un compresseur électrique utilisant un moteur électrique à rotor externe tout en maintenant des dimensions réduites, en particulier en ce qui concerne son diamètre mais également sa longueur.

Un autre avantage réside dans la possibilité de refroidir le moteur électrique en forçant la circulation du fluide réfrigérant autour du stator.

D'autres caractéristiques, détails et avantages de l'invention ressortiront plus clairement à la lecture de la description donnée ci-après à titre indicatif en relation avec les dessins dans lesquels :
- la figure 1 est une vue en coupe d'un compresseur selon l'invention,
- la figure 2 est une vue partielle d'une variante de la figure 1,
- la figure 3 est une vue partielle d'une deuxième variante de réalisation de la figure 1,
- la figure 4 est une vue partielle d'une troisième variante de réalisation de la figure 1.

Il faut noter que les figures exposent l'invention de manière détaillée et suffisante, lesdites figures peuvent bien entendu servir à mieux définir l'invention le cas échéant.

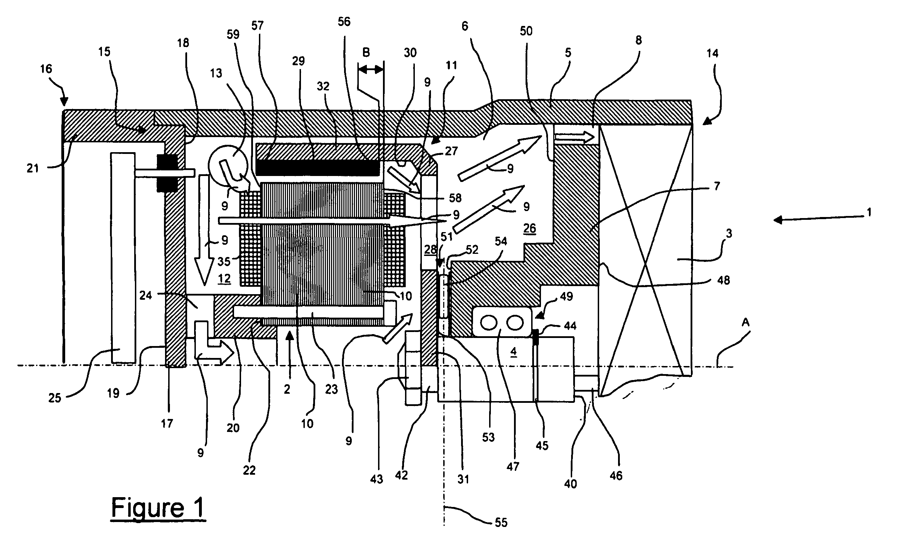

La figure 1 illustre un compresseur électrique selon une coupe longitudinale de ce dernier. Les composants internes représentés sur cette figure sont montrés partiellement mais il faut comprendre que l'axe A est un axe de symétrie au-delà duquel ces composants prennent une forme miroir.

Le compresseur 1 est un compresseur électrique en ce sens qu'il intègre un moteur électrique 2 qui entraîne en rotation un mécanisme de compression 3. Ce mécanisme de compression 3 est du type vis de compression (Scroll en anglais) ou du type à palettes ou encore du type à pistons, ces exemples étant donnés à titre illustratif sans pour autant limiter la portée de l'invention.

Le mécanisme de compression 3 comprend des pièces fixes ou mobiles, ces dernières étant mises en rotation par un dispositif d'entraînement qui comprend d'une manière globale un rotor 11 (partie du moteur électrique 2) solidaire d'un arbre 4 qui s'étend longitudinalement selon l'axe A. Cet arbre 4 s'étend donc dans la partie centrale du compresseur 1, sensiblement au centre d'un boîtier principal 5 qui détermine l'encombrement externe du compresseur.

Ce boîtier principal 5 est une pièce en aluminium ou en alliage d'aluminium de forme circulaire creuse comprenant une paroi périphérique qui délimite un volume interne 6 terminé d'un côté par une première extrémité 14 et de l'autre par une deuxième extrémité 15. Ces deux extrémités sont ouvertes avant montage des autres composants du compresseur.

La première extrémité 14 du boîtier 5 est fermée par le mécanisme de compression 3. Dans l'exemple de la figure, le mécanisme de compression 3 ferme le boîtier en étant enfilé au niveau de l'extrémité et à l'intérieur de ce dernier.

La deuxième extrémité 15 est quant à elle obturée par un boîtier secondaire 16 qui prend la forme d'une cuvette et dont le fond 17 présente une première face 18 tournée vers le mécanisme de compression 3. Une excroissance 20 prend naissance sur la première face 18 sous la forme d'un tube creux qui s'étend parallèlement à l'axe A et en direction du mécanisme de compression 3. Le boîtier secondaire 16 et l'excroissance 20 sont moulés simultanément à partir d'aluminium ou d'un alliage d'aluminium. Cette excroissance 20 comprend un bord d'accostage 22 sur lequel vient prendre appui un stator 10 du moteur électrique 2. Ce stator 10 est solidarisé mécaniquement sur l'excroissance 20 à l'aide d'au moins un moyen de fixation, par exemple une vis 23. Cette excroissance 20 comprend également un orifice de circulation 24 du fluide réfrigérant 9 de manière à pouvoir contourner le moteur électrique 2 en passant par son centre. Cet orifice de circulation 24 est un trou qui s'étend selon un axe perpendiculaire à l'axe A mais dans une autre alternative, le trou peut présenter une inclinaison autre qu'orthogonale, par exemple 45° ce qui favorise la circulation du fluide réfrigérant dans le volume interne du compresseur et limite ainsi les pertes de charges.

Le boîtier secondaire 16 comprend une deuxième face 19 opposée à la première face 18, c'est-à-dire tournée vers l'extérieur du compresseur 1. Un bord 21 est placé perpendiculairement au fond 17 et délimite ensemble une zone de réception d'un circuit de commande 25 du moteur électrique. Ce circuit de commande 25 est dans le cas présent un onduleur (Inverter en anglais) transformant un courant de forme continue en provenance du véhicule en un courant de forme sinusoïdale alimentant le moteur électrique 2.

Dans le volume interne 6 du compresseur, plus particulièrement dans la partie dédiée aux dispositifs électriques, est installé le moteur électrique 2. Ce dernier comprend un stator 10 comportant des bobines 35 et un rotor 11 qui tourne autour, c'est-à-dire à l'extérieur, du stator 10. On comprend donc que le stator 10 est placé de manière fixe à l'intérieur du rotor 11, ce dernier entourant de manière périphérique et externe le stator 10.

Le moteur électrique 2 placé dans le boîtier principal 5 sépare le volume interne 6 en une première chambre 12 et en une deuxième chambre 26, la première chambre 12 recevant le fluide réfrigérant à l'état gazeux en provenance du circuit de réfrigérant.

Le fluide réfrigérant pénètre dans la première chambre 12 au moyen d'une entrée 13 pratiquée dans le boîtier principal 5. Cette entrée prend la forme d'une tubulure qui s'étend radialement vers l'extérieur du boîtier principal et d'un trou pratiqué dans la paroi du boîtier principal au droit de la tubulure.

Des aimants permanents 29 sont solidarisés sur un support 27, et plus particulièrement sur une face interne 30 du support. Ce dernier présente la forme d'un bol avec un fond 31 et une bande circonférentielle 32. Le fond 31 est solidaire de l'arbre 4 de sorte à ce que le support 27 entraîne en rotation l'arbre 4. Ce fond 31 s'étend donc perpendiculairement à l'axe A et la bande circonférentielle 32 s'étend quant à elle orthogonalement par rapport au fond 31, en prenant naissance sur ce dernier. Autrement dit, la bande circonférentielle 32 s'étend parallèlement à l'axe A en direction du dispositif de commande 25.

L'arbre 4 est un tube cylindrique comprenant une première extrémité 40 côté mécanisme de compression 3 et une deuxième extrémité 41 opposée à la première extrémité et faisant face au boîtier secondaire 16. L'arbre comprend également un épaulement 42 dans lequel se loge le fond 31 du support 27. Cet épaulement comprend un moyen pour interdire la rotation entre l'arbre 4 et le support 27 qui prend la forme d'une clavette intercalée entre ces deux pièces, de méplats complémentaires formés sur ces deux pièces ou tout autre moyen permettant d'enfiler le fond 31 sur l'épaulement 42 tout en interdisant toute rotation relative entre ces deux pièces.

Le fond 31 du support 27 est solidarisé sur l'extrémité 41 de l'arbre 4 au moyen d'un dispositif de fixation 43. On comprend donc que l'arbre 4 se termine sensiblement au droit du fond 31 et qu'il ne s'étend pas au centre du compresseur 1 vers le boîtier secondaire 16. L'arbre est donc un arbre court de sorte à libérer l'espace central du compresseur et ainsi faciliter la circulation de fluide réfrigérant 9. Dans l'exemple de la figure 1, le moyen de fixation 43 prend la forme d'un écrou vissé sur le bout de l'arbre 4 de sorte à bloquer toute translation du support 27 par rapport à l'arbre 4.

L'arbre 4 comprend encore une butée circonférentielle 44 qui prend la forme d'un circlip ou anneau flexible amovible pris dans une gorge 45 usinée sur le pourtour de l'arbre 4. Cette butée circonférentielle 44 limite le déplacement axial de l'arbre 4 par rapport au premier moyen de rotation en direction du moteur électrique 2, c'est-à-dire à l'opposé du mécanisme de compression. Le déplacement axial dans l'autre direction, c'est-à-dire vers le mécanisme de compression 3 est limité par le second moyen de rotation 51.

De la première extrémité 40 débouche un pion d'actionnement 46 du mécanisme de compression 3. Ce pion 46 s'étend longitudinalement selon un axe parallèle à l'axe A mais décalé par rapport à ce dernier.

Un plateau 7 s'étend dans le volume interne 6 selon une direction perpendiculaire à l'axe A de sorte à séparer le volume interne 6 en une partie dédiée au mécanisme de compression 3 et une partie dédiée aux dispositifs électriques, en particulier le moteur électrique 2. Le plateau 7 présente au moins un passage 8 qui permet au fluide réfrigérant symbolisé par les flèches 9 de circuler de la partie dédiée aux dispositifs électriques, et plus particulièrement de la deuxième chambre 26, vers le mécanisme de compression 3. On notera tout particulièrement que ce passage 8 est effectué au travers du plateau 7 au niveau de la jonction entre ce plateau et le boîtier principal 5, c'est-à-dire à la périphérie externe du plateau 7. Ce plateau 7 est une pièce issue de moulage avec le boîtier principal formant ainsi une pièce monobloc en aluminium ou en alliage d'aluminium.

Le plateau 7 est traversé de part en part en son centre par l'arbre 4 constitutif du dispositif d'entraînement.

Ce plateau 7 comprend une paroi externe 48 tournée vers le mécanisme de compression 3, et cette paroi externe délimite un logement 49 de réception du premier moyen de rotation 47. Ce logement prend la forme d'un puits cylindrique dont l'ouverture débouche du côté du mécanisme de compression 3. Le logement 49 reçoit le premier moyen de rotation 47 qui prend la forme dans ce mode de réalisation d'un roulement cylindrique à double rangée de billes. Ce premier moyen de rotation 47, et en particulier le roulement cylindrique à double rangée de billes, présente un axe de rotation confondu avec l'axe A de l'arbre 4. Dans le cas d'espèce, une bague externe du roulement est montée à force dans le logement 49 alors qu'une bague interne est montée coulissante sur l'arbre 4. Comme l'arbre 4 peut se déplacer par translation dans le premier moyen de rotation 47, il est nécessaire de limiter ce déplacement. C'est le rôle de la butée circonférentielle 44 qui bloque une translation selon l'axe A de l'arbre 4 vers le moteur électrique 2 et sur laquelle le premier moyen de rotation 47 s'appuie.

Le plateau 7 comprend également une paroi interne 50 opposée à la paroi externe 48. Entre la paroi interne 50 et le rotor 11 est intercalé un second moyen de rotation 51 qui prend appui d'un côté sur un flan 52 du plateau 7 et faisant partie de la paroi interne 50 et de l'autre sur une face externe 53 du support 27, c'est-à-dire tournée vers le mécanisme de compression 3, au niveau du fond 31.

Sur la figure 1, le second moyen de rotation 51 prend la forme d'un roulement à rouleaux, appelé butée à aiguilles, dont chaque rouleau 54 tourne autour d'un axe 55 perpendiculaire à l'axe A de l'arbre 4. Vu de face, ce roulement à rouleaux prend la forme d'un disque plat constitué par une multitude de rouleaux dont les axes de rotations se croisent tous en un même point. Ce disque plat forme le plan général du second moyen de rotation 51.

On notera particulièrement que le plan dans lequel s'étend le second moyen de rotation 51 croise l'axe de rotation du premier moyen de rotation 47, ainsi que l'axe A car ces deux derniers sont confondus. Le plan et l'axe sont donc inclinés l'un par rapport à l'autre de manière à former un angle qui dans l'exemple de la figure 1 est 90°. Le moyen de rotation 51 est donc un roulement axial sur lequel s'appui le fond 31 du support 27.

Au moins une ouverture 28 traverse de part en part le fond 31 du support 27 constitutif du rotor 11 de sorte à autoriser la circulation d'une première partie du fluide réfrigérant 9 en provenance de l'orifice de circulation 24, d'une deuxième partie passant dans un interstice entre une paroi périphérique externe du stator 10 et une paroi interne des aimants permanents 29 et d'une troisième partie du fluide réfrigérant passant au travers du stator en circulant entre les bobines 35. Pour limiter les pertes de charges à haute vitesse, le support 27 comprend entre trois et six ouvertures.

La multiplicité d'aimants permanents 29 présente un premier bord latéral 56 côté mécanisme de compression et un second bord latéral 57 faisant face au boîtier secondaire 16. De son côté, le stator comporte un premier flan latéral 58 orienté vers le mécanisme de compression et un second flan latéral 59 orienté vers le boîtier secondaire 16. On voit sur la figure que la multiplicité d'aimants permanents 29 et le stator ne sont pas alignés sur un même axe. En effet, le premier flan latéral 58 est décalé par rapport au premier bord latéral 56 selon une distance illustrée par la référence B.

Cette structure se traduit par un avantage surprenant. En effet, l'attraction magnétique entre le rotor et le stator provoque une attirance du rotor vers le stator, ce qui se traduit par une force d'appui du support 27 sur le second moyen de rotation 51. Ainsi, un appui continu est exercé sur les rouleaux 54 ce qui évite des bruits de fonctionnement quand le second moyen de rotation 51 (butée à aiguilles) n'est pas constamment poussé par le rotor.

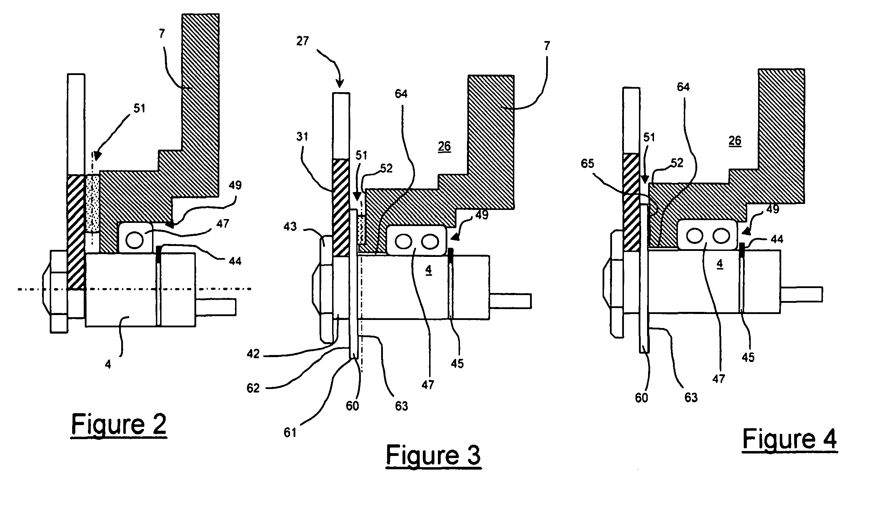

La figure 2 montre un assemblage identique à l'exception du premier moyen de rotation 47. Dans cette variante, ce moyen de rotation prend la forme d'un roulement à rangée unique de billes installé dans le logement de réception 49, ce qui permet de raccourcir l'arbre 4 et ainsi obtenir un compresseur de longueur restreinte. Comme pour la variante de la figure 1, la translation de l'arbre 4 est limitée d'un côté par le second moyen de rotation et de l'autre côté par l'anneau flexible 44.

La figure 3 est un exemple de l'invention où le second moyen de rotation 51 est installé différemment. Alors que sur l'exemple des figures 1 et 2, le second moyen de rotation 51 est interposé entre le fond 31 du support 27 et le flan 52 du plateau 7, dans l'exemple de la figure 3, le second moyen de rotation est interposé entre l'arbre 4 et ce même flan du plateau 7.

Plus particulièrement, l'arbre 4 comprend un disque 60 solidaire de ce dernier et formé sur l'arbre entre la gorge 45 et l'épaulement 42 qui reçoit le support 27. Ce disque présente un diamètre supérieur à celui de l'arbre 4. Ce disque 60 est délimité par un bord externe cylindrique 61, une première face 62 contre laquelle le fond 31 du support 27 prend appui après serrage du moyen de fixation 43 et une seconde face 63 contre laquelle le second moyen de rotation 51 prend appui. Les rouleaux 54 du second moyen de rotation 51 tourne donc à la fois contre la seconde face 63 du disque 60 et contre le flan 52 du plateau 7.

Une telle solution offre une gestion simplifiée de la prise en compte des tolérances des composants ayant un impact sur le second moyen de rotation 51. En effet, la présence du disque 60 solidaire de l'arbre 4 évite de prendre en considération les tolérances dimensionnelles du fond 31 du support 27 ainsi que les tolérances de fixation inhérentes au moyen de fixation 43.

Une troisième variante de l'invention est illustrée à la figure 4. Dans le cas présent, le second moyen de rotation 51 prend la forme d'un palier lisse 65 illustré sur cette figure par un trait fort. Le disque 60, et plus particulièrement la seconde face 63 de ce disque, est en contact avec le flan 52 du plateau 7 par l'intermédiaire du palier lisse 65.

De manière plus détaillée, ce palier lisse 65 est un traitement de la surface de contact de sorte à faciliter le glissement du disque 60 sur le flanc 52 du plateau 7 malgré les efforts axiaux qui s'exercent sur l'arbre 4 en direction du mécanisme de compression 3. Ce traitement de surface est effectué sur la seconde face 63 du disque 60 et/ou sur le flanc 52 du plateau 7.

Ce traitement de surface comprend trois couches :
- une couche de base formée par la seconde face 63 du disque, dans ce cas fabriqué en acier, - une couche intermédiaire ou couche frittée comportant des particules solides de lubrifiant mélangées à coeur avec un matériau synthétique ou du bronze,
- une couche de frottement ou de glissement comprenant un lubrifiant solide tel que le PTFE (Polytetrafluoroethylene).

Ce palier lisse 65 garantit ainsi la rotation entre le disque 60 et le flanc 52 du plateau 7 sans usure de l'une ou l'autre de ces pièces.

Le palier lisse 65 a été décrit ci-dessus comme étant interposé entre le disque 60 et le flanc 52 du plateau 7 mais l'invention couvre aussi le cas où un palier lisse est interposé directement entre le support 27 et le flanc 52, c'est-à-dire en lieu et place du roulement à aiguilles évoqué en rapport avec les figures 1 et 2.

Les figures 3 et 4 montrent également l'existence d'un canal de lubrification 64 pratiqué entre le plateau 7 et l'arbre 4 ainsi qu'entre le flan 52 et la seconde face 63 du disque 60 de sorte à autoriser une circulation d'un lubrifiant du logement 49 vers la deuxième chambre 26 et ainsi lubrifier le premier moyen de rotation 47 et le second moyen de rotation 51, en particulier le pallier lisse (figure 4) ou le roulement à aiguilles (figure 3).

La structure de l'invention facilite la circulation du fluide réfrigérant 9 dans le compresseur 1. Ce fluide pénètre par l'entrée 13 et la première partie du fluide réfrigérant se dirige vers le centre du compresseur en direction de l'orifice de circulation 24. Ce faisant, cette partie du fluide réfrigérant 9 lèche le second flan latéral 59 du stator 10 et échange thermiquement avec ce dernier de sorte à le refroidir. La deuxième partie du fluide réfrigérant 9 qui circule entre le rotor 11 et le stator 10 lèche la paroi périphérique externe du stator 10 et échange thermiquement avec ce dernier. Enfin, la troisième partie du fluide réfrigérant, en passant au travers du stator, échange avec les bobines 35 et refroidit ces dernières.
Grâce à l'arbre 4 raccourci selon l'invention, le fluide réfrigérant 9 circule dans l'espace libéré par l'arbre pour être dirigé vers la deuxième chambre 26. Enfin, la présence des ouvertures dans le fond 31 concentre la premier et la deuxième partie du fluide réfrigérant 9 où il échange thermiquement avec le premier flan latéral 58 du stator 10 qui fait face au mécanisme de compression 3.

## Revendications

1. Compresseur électrique (1) comprenant un mécanisme de compression (3) entrainé en rotation par un dispositif d'entrainement traversant un boîtier principal (5) qui délimite un volume interne (6) à l'intérieur duquel est installé un moteur électrique (2), le moteur électrique comprenant un stator (10) et un rotor (11) qui s'étend au moins partiellement à la périphérie externe du stator (10), ledit dispositif d'entraînement comprenant le rotor (11) solidaire d'un arbre (4) qui passe au travers d'un plateau (7) solidaire du boîtier principal (2), un premier moyen de rotation (47) entre l'arbre (4) et le plateau (7), **caractérisé en ce qu'**il comprend un second moyen de rotation (51) entre le dispositif d'entraînement et le plateau (7), le premier moyen de rotation (47) présente un axe de rotation et le deuxième moyen de rotation (51) s'étend dans un plan, ledit plan et ledit axe s'étendant angulairement l'un par rapport à l'autre, le rotor (11) comprend un support (27) sur lequel est solidarisée une multiplicité d'aimants permanents (29), ladite multiplicité d'aimants permanents (29) et le stator (10) sont désaxés, ledit stator étant décalé vers le mécanisme de compression (3).

2. Compresseur selon la revendication 1, dans lequel le plateau (7) comprend une paroi interne (50) tournée vers le moteur électrique (2) et ledit rotor (11) comprend un support (27) sur lequel est solidarisée une multiplicité d'aimants permanents (29), ledit second moyen de rotation (51) étant interposé entre le support (27) et la paroi (50).

3. Compresseur selon la revendication 1, dans lequel le plateau (7) comprend une paroi interne (50) tournée vers le moteur électrique (2) et l'arbre (4) comprend un disque (60), ledit second moyen de rotation (51) étant interposé entre ledit disque (60) et la paroi (50).

4. Compresseur selon l'une quelconque des revendications 1 à 3, dans lequel le plateau (7) comprend une paroi externe (48) tournée vers le mécanisme de compression (3), ladite paroi externe (48) délimitant un logement (49) de réception du premier moyen de rotation (47).

5. Compresseur selon l'une quelconque des revendications précédentes, dans lequel le rotor (11) comprend un support (27) sur lequel est solidarisée une multiplicité d'aimants permanents (29), ledit support (27) comprend un fond (31) solidarisé sur l'arbre (4) et qui s'étend radialement par rapport à l'arbre (4), ledit fond (31) comprenant au moins une ouverture (28) pour une circulation d'un fluide réfrigérant (9).

6. Compresseur selon l'une quelconque des revendications 1 à 5, dans lequel l'arbre (4) comporte une butée circonférentielle (44) contre laquelle le premier moyen de rotation (47) prend appui.

7. Compresseur selon l'une quelconque des revendications précédentes, dans lequel le premier moyen de rotation (47) est un roulement à rangée unique de billes.

8. Compresseur selon l'une quelconque des revendications 1 à 6, dans lequel le premier moyen de rotation (47) est un roulement à rangée double de billes.

9. Compresseur selon l'une quelconque des revendications précédentes, dans lequel le second moyen de rotation (51) est un roulement à rouleaux.

10. Compresseur selon l'une quelconque des revendications 1 à 8, dans lequel le second moyen de rotation (51) est un palier lisse (65).

11. Compresseur selon l'une quelconque des revendications précédentes, dans lequel le moteur électrique (2) sépare le volume interne (6) en délimitant d'un côté une première chambre (12) et de l'autre une deuxième chambre (26), ladite première chambre (12) étant alimentée en fluide réfrigérant (9) par une entrée (13) pratiquée dans le boîtier principal (5) alors que la deuxième chambre (26) alimente le mécanisme de compression via un passage (8).

## Patentansprüche

1. Elektrisch angetriebener Verdichter (1), umfassend einen Verdichtungsmechanismus (3), der in Drehung von einer Antriebsvorrichtung angetrieben wird, die durch ein Hauptgehäuse (5) hindurchgeht, das ein Innenvolumen (6) begrenzt, in dem ein Elektromotor (2) installiert ist, wobei der Elektromotor einen Stator (10) und einen Rotor (11) umfasst, der sich zumindest teilweise an der äußeren Peripherie des Stators (10) erstreckt, wobei die Antriebsvorrichtung den Rotor (11) umfasst, der mit einer Welle (4) verbunden ist, die durch eine Platte (7) hindurchgeht, die mit dem Hauptgehäuse (2) verbunden ist, ein erstes Rotationsmittel (47) zwischen der Welle (4) und der Platte (7), **dadurch gekennzeichnet, dass** er ein zweites Rotationsmittel (51) zwischen der Antriebsvorrichtung und der Platte (7) umfasst, wobei das erste Rotationsmittel (47) eine Rotationsachse aufweist und sich das zweite Rotationsmittel (51) in einer Ebene erstreckt, wobei sich die Ebene und die Achse im Winkel zueinander erstrecken, wobei der Rotor (11) eine Unterstützung (27) umfasst, auf der eine Vielzahl von Dauermagneten (29) befestigt ist, wobei die Vielzahl von Dauermagneten (29) und der Stator (10) achsversetzt sind, wobei der Stator zum Verdichtungsmechanismus (3) versetzt ist.

2. Verdichter nach Anspruch 1, bei dem die Platte (7) eine Innenwand (50) umfasst, die zum Elektromotor (2) gewandt ist, und der Rotor (11) eine Unterstützung (27) umfasst, auf der eine Vielzahl von Dauermagneten (29) befestigt ist, wobei das zweite Rotationsmittel (51) zwischen der Unterstützung (27) und der Wand (50) angeordnet ist.

3. Verdichter nach Anspruch 1, bei dem die Platte (7) eine Innenwand (50) umfasst, die zum Elektromotor (2) gewandt ist, und die Welle (4) eine Scheibe (60) umfasst, wobei das zweite Rotationsmittel (51) zwischen der Scheibe (60) und der Wand (50) angeordnet ist.

4. Verdichter nach einem der Ansprüche 1 bis 3, bei dem die Platte (7) eine Außenwand (48) umfasst, die zum Verdichtungsmechanismus (3) gewandt ist, wobei die Außenwand (48) eine Aufnahmelagerung (49) für das erste Rotationsmittel (47) begrenzt.

5. Verdichter nach einem der vorhergehenden Ansprüche, bei dem der Rotor (11) eine Unterstützung (27) umfasst, auf der eine Vielzahl von Dauermagneten (29) befestigt ist, die Unterstützung (27) einen Boden (31) umfasst, der auf der Welle (4) befestigt ist und sich radial in Bezug zur Welle (4) erstreckt, wobei der Boden (31) mindestens eine Öffnung (28) für eine Zirkulation eines Kühlfluids (9) umfasst.

6. Verdichter nach einem der Ansprüche 1 bis 5, bei dem die Welle (4) einen Umfangsanschlag (44) umfasst, an dem das erste Rotationsmittel (47) zur Anlage gelangt.

7. Verdichter nach einem der vorhergehenden Ansprüche, bei dem das erste Rotationsmittel (47) ein Kugellager mit einer Kugelreihe ist.

8. Verdichter nach einem der Ansprüche 1 bis 6, bei dem das erste Rotationsmittel (47) ein Kugellager mit einer doppelten Kugelreihe ist.

9. Verdichter nach einem der vorhergehenden Ansprüche, bei dem das zweite Rotationsmittel (51) ein Wälzlager ist.

10. Verdichter nach einem der Ansprüche 1 bis 8, bei dem das zweite Rotationsmittel (51) ein Gleitlager (65) ist.

11. Verdichter nach einem der vorhergehenden Ansprüche, bei dem der Elektromotor (2) das Innenvolumen (6) trennt, wobei er auf einer Seite eine erste Kammer (12) und auf der anderen eine zweite Kammer (26) begrenzt, wobei die erste Kammer (12) mit Kühlfluid (9) durch einen Eingang (13) versorgt wird, der in dem Hauptgehäuse (5) vorgesehen ist, während die zweite Kammer (26) den Verdichtungsmechanismus über einen Durchgang (8) versorgt.

## Claims

1. Electric compressor (1) comprising a compression mechanism (3) rotated by a drive device that extends through a main casing (5) delimiting an internal volume (6) inside which an electric motor (2) is installed, the electric motor including a stator (10) and a rotor (11), which extends at least partially on the outer periphery of the stator (10), said drive device including the rotor (11), solidly connected to a shaft (4), which extends through a plate (7) solidly connected to the main casing (5), and a first rotation means (47) between the shaft (4) and the plate (7) **characterized in that** it includes a second rotation means (51) between the drive device and the plate (7), the first rotation means (47) has an axis of rotation and the second rotation means (51) extends in a plane, said plane and said axis extending angularly one in relation to the other, and the rotor (11) includes a support (27) to which a multiplicity of permanent magnets (29) is solidly connected, said multiplicity of permanent magnets (29) and the stator (10) being offset, said stator being offset toward the compression mechanism (3).

2. Compressor according to Claim 1, in which the plate (7) includes an inner wall (50) turned toward the electric motor (2) and said rotor (11) includes a support (27) to which a multiplicity of permanent magnets (29) is solidly connected, said second rotation means (51) being interposed between the support (27) and the wall (50).

3. Compressor according to Claim 1, in which the plate (7) includes an inner wall (50) turned toward the electric motor (2) and the shaft (4) includes a disk (60), said second rotation means (51) being interposed between said disk (60) and the wall (50).

4. Compressor according to any one of Claims 1 to 3, in which the plate (7) includes an outer wall (48) turned toward the compression mechanism (3), said outer wall (48) delimiting a housing (49) for accommodating the first rotation means (47).

5. Compressor according to any one of the preceding claims, in which the rotor (11) includes a support (27) to which a multiplicity of permanent magnets (29) is solidly connected, said support (27) includes an end wall (31) solidly connected to the shaft (4) and which extends radially in relation to the shaft (4), said end wall including at least one opening (28) for the circulation of a coolant (9).

6. Compressor according to any one of Claims 1 to 5, in which the shaft (4) incorporates a circumferential stop (44) against which the first rotation means (47) bears.

7. Compressor according to any one of the preceding claims, in which the first rotation means (47) is a single-row ball bearing.

8. Compressor according to any one of Claims 1 to 6, in which the first rotation means (47) is a double-row ball bearing.

9. Compressor according to any one of the preceding claims, in which the second rotation means (51) is a roller bearing.

10. Compressor according to any one of Claims 1 to 8, in which the second rotation means (51) is a plain bearing (65).

11. Compressor according to any one of the preceding claims, in which the electric motor (2) separates the internal volume (6), delimiting a first chamber (12) on one side and a second chamber (26) on the other, said first chamber (12) being supplied with coolant (9) through an inlet (13) made in the main casing (5), while the second chamber (26) supplies the compression mechanism through a passage (8).
